# EUROPÄISCHE PATENTSCHRIFT

(11) **EP 2 134 164 B1**
(45) Veröffentlichungstag und Bekanntmachung des Hinweises auf die Patenterteilung: **12.12.2012**
(21) Anmeldenummer: 08716868.8
(22) Anmeldetag: 15.02.2008
(51) Int. Cl.: A01K 31/00

(54) **GEFLÜGELKÄFIGANORDNUNG**
POULTRY CAGE ARRANGEMENT
SYSTÈME DE CAGE POUR VOLAILLE

(30) Priorität: 06.03.2007 DE 202007003455 U
(43) Veröffentlichungstag der Anmeldung: 23.12.2009
(73) Patentinhaber: Big Dutchman International GmbH, 49377 Vechta (DE)
(72) Erfinder: WIENKEN, August, 49456 Bakum (DE)
(74) Vertreter: Eisenführ, Speiser & Partner
(86) Internationale Anmeldenummer: PCT/EP2008/051861
(87) Internationale Veröffentlichungsnummer: WO 2008/107292

(56) Entgegenhaltungen:
- EP-A- 0 609 057
- WO-A-96/09756
- NL-C1- 1 002 007
- US-A- 3 796 189
- US-A- 4 023 531
- US-A- 4 480 588

## Beschreibung

Die Erfindung betrifft eine Geflügelkäfiganordnung, die insbesondere zur Aufzucht von Mastgeflügel ausgebildet ist, umfassend: einen Geflügelkäfig mit einem allseitig von Begrenzungswänden, insbesondere Gittern, umschlossenen Geflügelhalteraum und einer Bodenfläche, eine unterhalb der Bodenfläche angeordnete Fördervorrichtung mit einer Förderoberfläche zum Fördern des im Geflügelkäfig gehaltenen Geflügels vom Geflügelkäfig zu einer Verladestation wie einer Verpackungsstation, insbesondere ein Förderband, wobei die Bodenfläche so ausgebildet ist, dass sie aus einer ersten Stellung, in der sie den Geflügelhalteraum nach unten begrenzt und eine Stehfläche für darin befindliches Geflügel darstellt in eine zweite Stellung bewegt werden kann, in der sie ein Ausstallen des im Geflügelhalteraums befindlichen Geflügels auf die Fördervorrichtung erlaubt, indem sie dem Geflügelkäfig befindliche Geflügel keinen Halt mehr bietet. Eine derartige Anordnung ist aus US-A-3796189 bekannt.

Die heute übliche Aufzucht von Geflügel, insbesondere Mastgeflügel, wobei im Sinne der Erfindung unter Geflügelaufzucht bzw. Geflügel auch die Aufzucht von anderen Tieren als Geflügel im Mastbetrieb sinngemäß verstanden werden soll, erfolgt heutzutage neben der klassischen Bodenaufzucht üblicherweise in mehreren nebeneinander und übereinander angeordneten Käfigen. Die Tiere werden in die Käfige eingesetzt und zu einem späteren Zeitpunkt ist es erforderlich, die Tiere zur Verladung, beispielsweise nach Erreichen der Schlachtreife zur Schlachtung, wieder aus den Käfigen herauszunehmen, was üblicherweise mit dem Begriff "Ausstallen" beschrieben wird, der in dieser Beschreibung und den anhängenden Ansprüchen in diesem Sinne verwendet wird. Es ist zu verstehen, dass die Tiere auch zu einem anderen Zweck als der Verladung ausgestallt werden können.

Es ist dabei bekannt, die Tiere durch Nutztierhaltungspersonal manuell aus jedem Käfig zu entnehmen und in Kisten oder dergleichen, die in einem Gang neben dem Käfig bereit gestellt sind, unmittelbar zu verpacken, um die Tiere dann in diesen Kisten transportieren zu können. Diese Art der Ausstallung ist jedoch personal- und damit kostenintensiv und daher häufig nicht mehr wirtschaftlich einsetzbar. Ebenso können durch das manuelle Greifen und Verbringen der Tiere in die Kisten Schäden am Tier, z.B. Knochenbrüche, entstehen.

Es ist weiterhin bekannt, die Tiere in einem Geflügelkäfig mit einem allseitig von Begrenzungswänden, insbesondere Gittern, umschlossenen Geflügelhalteraum und einer Bodenfläche zu halten, wobei unterhalb der Bodenfläche eine Fördervorrichtung mit einer Förderoberfläche zum Fördern des im Geflügelkäfig gehaltenen Geflügels vom Geflügelkäfig zu einer Verladestation wie einer Verpackungsstation angeordnet ist. Die Fördervorrichtung kann insbesondere ein Förderband sein. Oftmals kann bei diesen Ausgestaltungen als Fördervorrichtung ein ohnehin vorgesehenes Kotförderband eingesetzt werden, welches während der Aufzucht der Tiere dazu dient, aus den Käfigen herausfallende Verunreinigungen abzutransportieren, um die Hygiene innerhalb des Käfigs zu gewährleisten und das nach Reinigung von diesen Verunreinigungen zur Förderung der Tiere im Zuge der Ausstallung dienen kann. Bei diesen fortgebildeten Geflügelkäfiganordnungen ist die Bodenfläche so ausgebildet, dass sie aus einer ersten Stellung, in der sie den Geflügelhalteraum nach unten begrenzt und eine Stehfläche für darin befindliches Geflügel darstellt, in eine zweite Stellung bewegt werden kann, in der sie ein Ausstallen des im Geflügelraum befindlichen Geflügels auf die Fördervorrichtung erlaubt, in dem sie den im Käfig angeordneten Tieren keinen Halt mehr bietet. Die Tiere fallen dadurch auf die darunter liegende Fördervorrichtung und können mit Hilfe dieser Fördervorrichtung vom Käfig weg zu einer Verladestation transportiert werden.

Verschiedene Ausgestaltungen dieser Käfiganlagen sind bekannt. So ist einerseits bekannt, die Bodenfläche als faltbare Bodenmatte auszugestalten. Die Bodenmatte ist mittels eines Gestänges über dem gesamten Bodenbereich stabil gespannt und kann mittels auf die Gestänge wirkende Unterzüge zusammengerafft werden, wodurch die Bodenmatte auf eine Seite des Käfigs gezogen wird und eine Öffnung im Boden herstellt, durch welche die Tiere auf das darunter liegende Kotband fallen können. Zwar kann mit dieser Ausgestaltung eine effiziente Ausstallung erzielt werden, allerdings besteht ein Nachteil darin, dass die Tiere durch den Raffvorgang der Bodenmatte unmittelbar verletzt oder eingeklemmt und als Folge hiervon verletzt werden können. Zudem muss bei dieser Ausgestaltung das Kotband soweit unterhalb der faltbaren Bodenmatte angeordnet sein, dass die Tiere nach dem Herunterfallen auf das Kotband eine ausreichende Stehhöhe auf dem Kotband vorfinden, um unter den Trennwänden und der zusammengerafften Bodenmatte hindurch zur Verpackungsstation gefördert werden können. Dies bedingt eine verhältnismäßig große Bauhöhe der gesamten Käfiganordnung, was insbesondere nachteilig ist, wenn eine Mehretagenanordnung der Käfige beabsichtigt ist, da mit dieser Ausgestaltung in typischerweise bei Ställen üblicher Bauhöhe lediglich drei Etagen angeordnet werden können, wenn man den Tieren einen artgerechten Lebensraum zur Verfügung stellen möchte und selbst in diesem Fall es nur mittels eines Hubwagens oder dergleichen möglich ist, die oberste Etage zu kontrollieren.

Bei einer anderen bekannten Ausgestaltung solcher Käfiganordnungen ist vorgesehen, dass die Bodenfläche als starrer Kunststoffgitterboden ausgestaltet ist und seitlich zu einem Gang hin aus dem Käfig heraus gezogen werden kann, so dass die Tiere wiederum auf ein darunter angeordnetes Kotband fallen und ausgestallt werden können. Nachteilig an einer solchen Ausgestaltung ist wiederum die Verletzungsgefahr für die Tiere und des Weiteren die umständliche Betätigung der Böden im Zuge des Ausstallens, die schlechte Möglichkeit einer automatisierten Betätigung der Böden zum Ausstallen und zudem die schwierige Reinigungsmöglichkeit der Bodenfläche im sowohl eingesetzten wie auch herausgezogenen Zustand.

Grundsätzlich besteht ein Bedarf für eine Käfiganordnung, die einerseits ermöglicht, ein komfortables und effizientes Ausstallen aus einem Käfig mit möglichst geringer Verletzungsgefahr für die Tiere durchzuführen, andererseits aber hierdurch keine oder eine nur geringe Erhöhung der Bauhöhe der gesamten Käfiganordnung bewirkt. Zudem ist es wünschenswert, eine Käfiganordnung bereitzustellen, die eine umfassende und gründliche Reinigungsmöglichkeit aufweist. Der Erfindung liegt die Aufgabe zugrunde, eine Käfiganordnung bereit zu stellen, welche zumindest einige der zuvor erläuterten Nachteile zumindest teilweise überwindet und eine verbesserte Käfiganordnung bereit stellt.

Diese Aufgabe wird mit einer Anordnung nach Anspruch 1 gelöst.

Durch die erfindungsgemäße Fortbildung werden die aus dem Stand der Technik bekannten, nachteilhaften Ausgestaltungen des Bodens eines Geflügelkäfigs vermieden und stattdessen eine vorteilhafte Ausgestaltung mit einem oder mehren schwenkbaren Bodensegmenten bereit gestellt. Die Bodensegmente stellen in einer ersten Stellung eine durchgehende Bodenaufstandsfläche für das im Geflügelkäfig angeordnete Geflügel dar. Dabei ist zu verstehen, dass diese durchgehende Bodenfläche durchaus und vorteilhafter Weise perforiert sein kann oder in anderer Weise für Verschmutzungen durchlässig ausgestaltet sein kann. In einer zweiten Stellung, in der die Bodensegmente und damit die Bodenfläche bzw. Bodenflächenabschnitte verschwenkt sind, ist diese Bodenfläche für das Geflügel nicht mehr bereit gestellt, sondern es besteht keine Möglichkeit für das Geflügel mehr, auf der Bodenfläche Halt zu finden, so dass das Geflügel zwischen den Bodensegmenten hindurch auf die darunter angeordnete Fördervorrichtung fällt. Die erfindungsgemäße Fortbildung hat einerseits den Vorteil, dass eine einfache Reinigungsmöglichkeit der Bodensegmente besteht, insbesondere in der verschwenkten, zweiten Stellung, da durch die Verschwenkung sowohl Ober- wie auch Unterseite jedes Bodensegments leicht zugänglich sind und beispielsweise mit einem Hochdruckreiniger oder einem Wasserstrahl leicht von Verunreinigungen befreit werden können. Durch die Verschwenkung der Bodensegmente ist eine vorteilhafte Kinematik möglich, welche insbesondere eine geometrische Ausgestaltung erlaubt, bei der einerseits die Verletzungsgefahr für die Tiere bei der Ausstallung verringert wird und zudem durch die Verschwenkung zusätzlicher Platz oberhalb der Fördervorrichtung bereit gestellt wird, um hierdurch eine lichte Raumhöhe bereit zu stellen, die für den Fördertransport des Geflügels benötigt wird.

Gemäß einer ersten bevorzugten Ausführungsform umfasst jedes schwenkbare Bodensegment eine Bodenaufstandsfläche, die in der ersten Stellung um einen ersten Abstand von einer Förderoberfläche der Fördervorrichtung beabstandet ist und in der zweiten Stellung um einen zweiten Abstand von dieser Förderoberfläche beabstandet ist, der größer ist als der erste Abstand.

Bei dieser Ausführungsform wird ermöglicht, dass die Bodensegmente mit ihrer Bodenaufstandsfläche in der ersten Stellung, also derjenigen Stellung, in welcher die Tiere auf der Bodenaufstandsfläche stehen, in einem nur geringen Abstand zur Förderoberfläche der Fördervorrichtung angeordnet sind, insbesondere nur in einem solchen Abstand, der beispielsweise eine Abtransportfunktion für Verunreinigungen aus dem Käfig mittels der Fördervorrichtung gerade ermöglicht, nicht jedoch einen Abtransport von Geflügel. In der zweiten Stellung, also derjenigen, welche zur Ausstallung dient und in der die Tiere keinen Halt mehr auf der Bodenaufstandsfläche finden, wird ein größerer Abstand zwischen Förderoberfläche und Bodenaufstandsfläche bereit gestellt, insbesondere wird hierdurch eine lichte Höhe oberhalb der Förderoberfläche bereit gestellt, welche den Abtransport der Tiere auf der Förderoberfläche nach ihrem Herunterfallen auf die selbe ermöglicht. Die Ausgestaltung ermöglicht es somit, die gesamte Bauhöhe einer Geflügelkäfiganordnung mit Geflügelkäfig und Fördervorrichtung wesentlich niedriger zu halten als im Stand der Technik, ohne das hierzu auf eine verringerte Höhe für den Transport der Tiere auf der Förderoberfläche und/oder eine geringere Höhe des Käfigs selbst zurückgegriffen werden muss. Stattdessen kann durch die sehr geringe Distanz zwischen Förderoberfläche und Bodenaufstandsfläche in der ersten Stellung sowohl im Käfig eine für die Aufzucht und artgerechte Haltung erforderliche Käfighöhe bereit gestellt werden als auch die für die Ausstallung benötigte lichte Höhe oberhalb der Förderoberfläche in der zweiten Stellung bereit gestellt werden.

Es ist zu verstehen, dass die Schwenkbewegung der Bodensegmente um eine tatsächlich physikalisch vorhandene Achse stattfinden kann oder um eine virtuelle, durch konstruktive Elemente bereit gestellte Achse. Des Weiteren kann die Schwenkbewegung auch als zusammengesetzte Bewegung, beispielsweise als Verschwenkung um zwei oder mehr Achsen in zeitlicher Abfolge erfolgen.

Weiterhin ist es bevorzugt, wenn jedes schwenkbare Bodensegment eine Bodenaufstandsfläche umfasst, und die Bodenaufstandsfläche in der ersten Stellung etwa waagerecht ausgerichtet ist und in der zweiten Stellung geneigt, vorzugsweise senkrecht ausgerichtet ist.

Durch diese Ausgestaltung wird eine noch leichtere Reinigung der Bodenaufstandsflächen in der zweiten Stellung ermöglicht und eine sichere Ausstallung der Tiere durch Verschwenken der Bodenaufstandsfläche in die zweite Stellung erreicht.

Edes schwenkbare Bodensegment umfasst eine Bodenaufstandsfläche, die um eine Schwenkachse verschwenkbar ist, die beabstandet, insbesondere oberhalb von der Bodenaufstandsfläche angeordnet ist. Unter einer Beabstandung zwischen Schwenkachse und Bodenaufstandsfläche ist hierbei zu verstehen, dass derjenige Bereich der Bodenaufstandsfläche, welcher den Tieren im Käfig als Aufstandsfläche dient von der reellen oder virtuellen Schwenkachse beabstandet ist. Durch diese Beabstandung wird erreicht, dass durch die Schwenkbewegung der lichte Raum oberhalb der Förderoberfläche bei Verschwenken von der ersten in die zweite Stellung vergrößert werden kann. Der erforderliche Abstand zwischen Schwenkachse und Bodenaufstandsfläche ist daher vom Fachmann konstruktiv mit üblichen Mitteln zu bestimmen, wobei insbesondere der bereits in der ersten Stellung bestehende Abstand zwischen Bodenaufstandsfläche oder Förderoberfläche und der mögliche Verschwenkwinkel zwischen erster und zweiter Stellung zu berücksichtigen ist. Grundsätzlich kann die Schwenkachse beispielsweise in der gleichen Ebene wie die Bodenaufstandsfläche liegen, aber von dieser in horizontaler Richtung beabstandet sein. Insbesondere ist auch denkbar, eine solche horizontale Beabstandung zu kombinieren mit einer vertikal unterhalb der Bodenaufstandsfläche liegenden Schwenkachse. Grundsätzlich ist es aber bevorzugt, dass die Schwenkachse oberhalb der Bodenaufstandsfläche angeordnet ist, da hierdurch mit kurzen Hebelarmen zwischen Schwenkachse und Bodenaufstandsfläche eine Kinematik erreicht werden kann, welche eine signifikante lichte Raumerhöhung oberhalb der Förderoberfläche durch Verschwenken des Bodensegments von der ersten in die zweite Stellung erreichen kann.

Gemäß einer weiteren bevorzugten Ausführungsform wird die Bodenfläche durch mehrere Bodensegmente mit Bodenaufstandsflächen gebildet, deren Bodenaufstandsflächen in der ersten Stellung fluchtend zueinander angeordnet sind und so einen ebenen Käfigboden ausbilden. Durch diese Ausgestaltung ist es möglich, die Bodenaufstandsflächen selbst in ihrer Erstreckung senkrecht zur Schwenkachse mit geringen Abmessungen auszugestalten, wodurch einerseits die Verschwenkbarkeit konstruktiv in vereinfachter Weise erreicht werden kann und andererseits die Gefahr einer Verletzung des Geflügels im Zuge der Ausstallung weiter reduziert werden kann, da keine größeren Horizontalbewegungen von Bodenaufstandsflächen erfolgen.

Dabei ist es besonders bevorzugt, wenn jedes Bodensegment um eine Schwenkachse verschwenkbar ist und die Schwenkachsen der mehreren Bodensegmente in einer Ebene liegen. Hierdurch kann eine robuste Bauweise durch eine gemeinsame Tragstruktur für alle Schwenkachsen realisiert werden.

Noch weiter ist es bevorzugt, wenn der Abstand zwischen der Unterseite der Bodenfläche und der Förderoberfläche in der ersten Stellung kleiner als 10 cm ist, insbesondere 3 bis 8 cm, vorzugsweise 5cm ist und in der zweiten Stellung zwischen den verschwenkten Bodensegmenten und der Förderoberfläche ein lichter Raum bereit gestellt wird, der es erlaubt, auf der Förderoberfläche angeordnetes Geflügel unterhalb der Bodensegmente hindurchzufördern. Mit dieser Ausgestaltung wird einerseits ein für den Abtransport von Verunreinigungen, wie beispielsweise Kot, während der Aufzucht des Geflügels im Geflügelkäfig ausreichender Abstand zwischen Bodenfläche und Förderoberfläche bereit gestellt. Zugleich wird eine insgesamt geringe Bauhöhe der gesamten Geflügelkäfiganordnung bereit gestellt, was zu einer günstigen Ausnutzung des im Stallgebäude zur Verfügung stehenden Raumes führt. So kann mit der erfindungsgemäßen Ausführungsform eine vieretagige Ausgestaltung verwirklicht werden, ohne das hierzu der den Tieren zur Verfügung stehende Raum verringert werden muss im Vergleich zu einer konventionellen Bauweise, die nur eine dreigeschossige Anordnung von Geflügelkäfigen auf gleichem Bauraum zulässt. Um eine sichere und Verletzungen der Tiere vermeidende Ausstallung zu gewährleisten, ist es beispielsweise für Broilergeflügel erforderlich, einen lichten Raum von einer Höhe von 15-20 cm oberhalb der Förderoberfläche in der zweiten Stellung bereit zu stellen.

Schließlich ist es noch bevorzugt, wenn die Bodensegmente in der ersten und/oder der zweiten Position verriegelbar sind. Durch eine solche Verriegelung wird die Reinigung der Bodensegmente in der zweiten Stellung vereinfacht und die Sicherheit der Tiere in der ersten Stellung gewährleistet.

Ein weiterer Aspekt der Erfindung ist eine Geflügelkäfiganlage gemäβ Anspruch 8, umfassend mehrere in einer Reihe angeordnete Geflügelkäfige, wobei jeder Geflügelkäfig allseitig von Begrenzungswänden, insbesondere Gittern, umschlossene Geflügelhalteräume und eine Bodenfläche umfasst, eine unterhalb der Geflügelkäfige angeordnete sich entlang der Geflügelkäfige erstreckende Fördervorrichtung mit einer Förderoberfläche zum Fördern des im Geflügelkäfig gehaltenen Geflügels aus jedem der in Reihe angeordneten Geflügelkäfige zu einer Verladestation wie einer Verpackungsstation, insbesondere ein Förderband, wobei die Bodenfläche jedes der Geflügelkäfige so ausgebildet ist, dass sie aus einer ersten Stellung, in der sie den Geflügelhalteraum nach unten begrenzt und eine Stehfläche für darin befindliches Geflügel darstellt in eine zweite Stellung bewegt werden kann, in der sie ein Ausstallen des im Geflügelhalteraums befindlichen Geflügels auf die Fördervorrichtung erlaubt, indem sie dem Geflügel keinen Halt mehr bietet, wobei die Bodenfläche aus zumindest einem, vorzugsweise mehreren schwenkbaren Bodensegment(en) besteht, das/die zwischen der ersten und der zweiten Stellung verschwenkbar ist/sind.

Die erfindungsgemäße Geflügelkäfiganlage setzt das zuvor erläuterte erfindungsgemäße Prinzip der Geflügelkäfiganordnung für eine Reihe von Geflügelkäfigen um, die in einer Linie angeordnet sind und eine gemeinsame Fördervorrichtung nutzen, die unter allen in Reihe angeordneten Geflügelkäfigen hindurchläuft. Dabei ist es besonders bevorzugt, wenn die Geflügelkäfige nach einer der zuvor erläuterten vorteilhaften Ausgestaltungen fortgebildet sind. Noch weiter ist es bevorzugt, wenn der Abstand zwischen der Bodenfläche jedes Geflügelkäfigs und der Förderoberfläche in der ersten Stellung kleiner als 10 cm ist, insbesondere 3 bis 8 cm, vorzugsweise 5cm ist und in der zweiten Stellung zwischen den verschwenkten Bodensegmenten und der Förderoberfläche ein lichter Raum bereit gestellt wird, der es erlaubt, auf der Förderoberfläche angeordnetes Geflügel unterhalb den Bodensegmenten aller Geflügelkäfige hindurchzufördern. Diese Ausgestaltung berücksichtigt insbesondere die bei einer Reihenanordnung von Geflügelkäfigen erforderlichen konstruktiven Restriktionen, die insbesondere eine Behinderung der Ausstallung und des Transports der Tiere mittels der Fördervorrichtung durch andere Käfigelemente als die Bodensegmente betreffen, beispielsweise Trennwände zwischen den einzelnen Geflügelkäfigen oder dergleichen. Erfindungsgemäß ist vorgesehen, dass in der zweiten Stellung der Bodensegmente in dem Förderbereich unterhalb der Geflügelkäfige entlang der gesamten Fördervorrichtung keine Elemente der Geflügelkäfige in den lichten Raum, der zur Förderung der Tiere benötigt ist, hineinragen, um eine sichere Förderung und geringe Verletzungsgefahr zu gewährleisten.

Noch weiter ist es bevorzugt, wenn die erfindungsgemäße Geflügelkäfiganlage fortgebildet wird durch einen ersten Aktuator zur Verschwenkung der Bodensegmente eines ersten Geflügelkäfigs, insbesondere einer ersten Gruppe von Geflügelkäfigen, einen zweiten Aktuator zur Verschwenkung der Bodensegmente eines zweiten Geflügelkäfigs, insbesondere einer zweiten Gruppe von Geflügelkäfigen, wobei der erste Geflügelkäfig bzw. die erste Gruppe und der zweite Geflügelkäfig bzw. die zweite Gruppe entlang einer gemeinsamen Fördervorrichtung solcherart angeordnet sind, dass der erste Geflügelkäfig bzw. die erste Gruppe zwischen dem zweiten Geflügelkäfig bzw. der zweiten Gruppe und einer Verladestation wie einer Verpackungsanlage angeordnet ist, eine Ausstallungssteuerungseinrichtung zum Betätigen des ersten und zweiten Aktuators, die so ausgebildet ist, dass sie zu einem ersten Zeitpunkt den ersten Aktuator betätigt um die Bodensegmente des ersten Geflügelkäfigs bzw. der ersten Gruppe in die zweite Stellung zu verschwenken und zu einem zweiten, späteren Zeitpunkt den zweiten Aktuator betätigt um die Bodensegmente des zweiten Geflügelkäfigs bzw. der zweiten Gruppe in die zweite Stellung zu verschwenken und hierbei die Bodensegmente des ersten Geflügelkäfigs bzw. der ersten Gruppe mittels des ersten Aktuators in der zweiten Stellung hält.

Mit dieser bevorzugten Ausführungsform wird einerseits eine automatisierte Ausstallung ermöglicht, in dem die Verschwenkung der Bodensegmente durch Aktuatoren erfolgt. Dabei kann für jeden Geflügelkäfig einzeln ein Aktuator vorgesehen sein oder es können mehrere, vorzugsweise benachbarte Geflügelkäfige mittels eines gemeinsamen Aktuators betätigt werden. Grundsätzlich ist zu verstehen, dass bei umfangreichen Geflügelkäfiganlagen auch mehr als zwei Aktuatoren eingesetzt werden können. Die erfindungsgemäße Steuerungsvorrichtung ist dabei so ausgebildet, dass eine Überbelegung der Fördervorrichtung durch eine zeitgleiche Ausstallung einer großen Anzahl von Geflügelkäfigen verhindert wird, indem zunächst die der Verladeeinrichtung nächstliegenden Geflügelkäfige ausgestallt werden und hierauf folgend weiter entfernt liegende Geflügelkäfige ausgestallt werden, was insbesondere deshalb vorteilhaft ist, weil die Tiere aus den weiter entfernt liegenden Geflügelkäfigen unter den zuvor ausgestallten Geflügelkäfigen hindurch befördert werden müssen, das heißt diese näher zur Verladeeinrichtung liegenden Geflügelkäfige müssen sich bei Ausstallung der weiter entfernt liegenden Geflügelkäfige in der zweiten Stellung befinden, um die benötigte lichte Höhe für den Durchtransport bereit zu stellen.

Weiterhin ist es bevorzugt, wenn die Geflügelkäfiganordnung durch ein schwenkbares, unteres Trenngittersegment fortgebildet wird, welches zwischen einer ersten Stellung in der es die Geflügelkäfiganordnung zu einer benachbarten Käfiganordnung absperrt, in eine zweite Stellung, in der es den Abtransport von auf der Förderoberfläche befindlichem Geflügel aus dem Bereich unterhalb des Geflügelhalteraums ermöglicht, verschwenkbar ist. Grundsätzlich ist es erforderlich, bei einer Geflügelkäfiganordnung sicherzustellen, dass kein Tier aus dem Geflügelhalteraum seitlich herausgelangen kann, sei es, dass das Tier hierdurch in den allgemeinen Stallbereich oder eine benachbarte Geflügelkäfiganordnung gelangen könnte. Grundsätzlich kann dies erreicht werden, indem starre Trenngitterwände zwischen den Geflügelkäfiganordnungen vorgesehen werden. Allerdings kann bei der erfindungsgemäßen Fortbildung sich ein solches starres Trenngitter nicht bis auf die Höhe der Bodenaufstandfläche erstrecken, da in diesem Fall der untere Abschnitt des Trenngitters den Abtransport der Tiere auf der Fördervorrichtung verhindern würde. Diese ergänzende Problematik wird durch die vorgenannte Fortbildung vermieden. Demgemäß ist ein unteres Trenngittersegment beweglich ausgestaltet. Im einfachsten Fall kann dies beispielsweise erfolgen, indem das untere Trenngittersegment an einer oberen Schwenkachse, die horizontal entlang eines darüber liegenden starren Trenngitterabschnitts verläuft, gelagert ist und hierdurch die Tiere beim Abtransport das untere Trenngittersegment in eine geöffnete Stellung verschwenken, wenn sie durch die Fördervorrichtung gegen das verschwenkbare Trenngittersegment gedrückt werden. Allerdings sind auch fortgebildete Ausgestaltungen denkbar, in denen das untere Trenngittersegment durch eine eigene Aktuatorik mit mechanischer Kopplung oder dergleichen zum Zwecke der Ausstallung in die zweite Stellung verschwenkt werden kann, um hierdurch eine aktive Betätigung durch die Tiere selbst zu umgehen.

Besonders bevorzugt ist es, wenn das untere Trenngittersegment in der ersten Stellung durch eines der oder beide benachbarten Bodensegmente fixiert wird, wenn diese(s) Bodensegment(e) in der ersten Stellung sind.

Dabei ist es insbesondere bevorzugt, wenn das untere Trenngittersegment mit zumindest einem Bodensegmente gekoppelt ist, vorzugsweise an einem ihm benachbarten Bodensegment ausgebildet und mit diesem verschwenkbar ist. Eine solche Kopplung kann beispielsweise in einfacher Weise durch eine Verbindung zwischen dem Trenngittersegment und einem Bodensegment über einen Seilzug, eine Zugstange, Druckstange, oder dergleichen erzielt werden. Insbesondere ist es bevorzugt, das untere Trenngittersegment an demjenigen Bodensegment direkt auszubilden, welches an das Trenngitter seitlich anschließt. Das Trenngittersegment kann dabei verschwenkbar an dem Bodensegment gelagert sein. Insbesondere kann das Trenngittersegment aber einstückig und starr an diesem Bodensegment ausgebildet sein, wodurch die Verschwenkung des Trenngittersegments durch die Verschwenkung des Bodensegments selbst bewirkt wird. Hierbei ist zu beachten, dass bei einer solchen Ausgestaltung einer Verschwenkung des Bodensegments um einen solchen Winkel möglich sein muss, dass keine Aufstandsfläche durch das angeformte Trenngittersegment bereitgestellt wird, auf der sich ein Tier der Ausstallung widersetzen kann.

Schließlich ist es noch weiter bevorzugt, wenn mehrere in einer Reihe angeordnete Geflügelkäfige in Etagen übereinander angeordnet sind und unterhalb jeder Reihe von Geflügelkäfigen eine Fördervorrichtung angeordnet ist. Wie zuvor bereits erläutert, besteht einer der Vorteile der erfindungsgemäßen Geflügelkäfigvorrichtung in der geringeren Bauhöhe gegenüber dem Stand der Technik, so dass eine mehretagige Ausgestaltung insbesondere vorteilhaft ist in Verbindung mit der erfindungsgemäßen Geflügelkäfigvorrichtung.

Ein weiterer Aspekt der Erfindung ist ein Bodensegment für eine Geflügelkäfig-anordnung gemäβ Anspruch 13, welches eine Bodenaufstandsfläche und zumindest einen, vorzugsweise zwei Schwenklagerpunkte umfasst, der/die so angeordnet ist/sind, dass die durch den/die Schwenklagerpunkt(e) definierte Schwenkachse von der Bodenaufstandsfläche beabstandet ist und bei Verschwenkung des Bodensegments um diese Schwenkachse die Bodenaufstandsfläche aus einer ersten Stellung, in der sie auf einer ersten Höhe angeordnet ist, in eine zweite Höhe verschwenkt wird, die oberhalb von der ersten Höhe liegt. Ein solches Bodensegment eignet sich insbesondere zur nachträglichen Ausgestaltung bestehender Geflügelkäfiganordnungen zur Nutzung der Erfindung. Schließlich ist ein weiterer Aspekt der Erfindung ein Verfahren zum Ausstallen von Geflügel, mit den Schritten: Anordnen des Geflügels zur Aufzucht in einem, vorzugsweise mehreren Käfigen auf einer, vorzugsweise mehreren fluchtend nebeneinander angeordneten Bodenaufstandsflächen in einer ersten Stellung der Bodenaufstandsfläche, Verschwenken der Bodenaufstandsfläche um eine außerhalb der Bodenaufstandsfläche liegende Achse in eine zweite Stellung, in welcher das Geflügel keinen Halt mehr auf den Bodenaufstandsflächen hat, Fallenlassen des Geflügels auf eine unterhalb des Käfigs angeordnete Fördervorrichtung, Fördern des Geflügels von dem Käfig zu einer Verladestation wie einer Verpackungsanlage mittels der Fördervorrichtung.

Die erfindungsgemäße Vorrichtung arbeitet vorzugsweise nach diesem Verfahren und das vorgenannte Verfahren eignet sich zur Ausführung insbesondere mittels einer zuvor beschriebenen Geflügelkäfiganordnung oder Geflügelkäfiganlage.

Dabei ist es besonders bevorzugt, wenn die Bodenaufstandsflächen um eine Schwenkachse solcherart verschwenkt werden, dass sie in der ersten Stellung so oberhalb der Fördervorrichtung angeordnet sind, dass die lichte Höhe oberhalb der Fördervorrichtung nicht zum Fördern des Geflügels unterhalb der Käfige ausreichend ist und sie in der zweiten Stellung so oberhalb der Fördervorrichtung angeordnet sind, dass die lichte Höhe oberhalb der Fördervorrichtung zum Fördern des Geflügels unterhalb der Käfige ausreichend ist.

Bevorzugte Ausführungsformen der Erfindung werden anhand der anhängenden Figuren beschrieben. Es zeigen:
- Figur 1:: eine perspektivische Ansicht von schräg oben einer ersten Ausführungsform einer erfindungsgemäßen Geflügelkäfiganlage,
- Figur 2:: eine Seitenansicht der Ausführungsform gemäß Figur 1 in einer ersten Stellung der Bodensegmente,
- Figur 3:: eine Seitenansicht gemäß Figur 2 mit um ca. 40° verschwenkten Bodensegmenten,
- Figur 4:: eine Seitenansicht gemäß Figur 2 mit um ca. 80° verschwenkten Bodensegmenten,
- Figur 5:: eine Seitenansicht gemäß Figur 2 mit um ca. 110° verschwenkten Bodensegmenten,
- Figur 6:: eine Seitenansicht gemäß Figur 2 mit um ca. 145 ° verschwenkten Bodensegmenten in einer zweiten Stellung
- Figur 7:: eine perspektivische Ansicht von schräg oben einer zweiten Ausführungsform einer erfindungsgemäßen Geflügelkäfiganlage,
- Figur 8:: eine Seitenansicht der Ausführungsform gemäß Figur 7 mit den Bodensegmenten in einer ersten Stellung,
- Figur 9:: eine Seitenansicht gemäß Figur 8 mit um ca. 20° verschwenkten Bodensegmenten,
- Figur 10:: eine Seitenansicht gemäß Figur 8 mit um ca. 45° verschwenkten Bodensegmenten,
- Figur 11:: eine Seitenansicht gemäß Figur 8 mit um 90° verschwenkten Bodensegmenten in einer zweiten Stellung,
- Figur 12:: eine Seitenansicht einer dritten Ausführungsform der Erfindung, und
- Figur 13:: eine Seitenansicht der dritten Ausführungsform gemäß Fig. 12 mit den Bodensegmenten und einem unteren Trenngittersegment in einer verschwenkten Stellung.

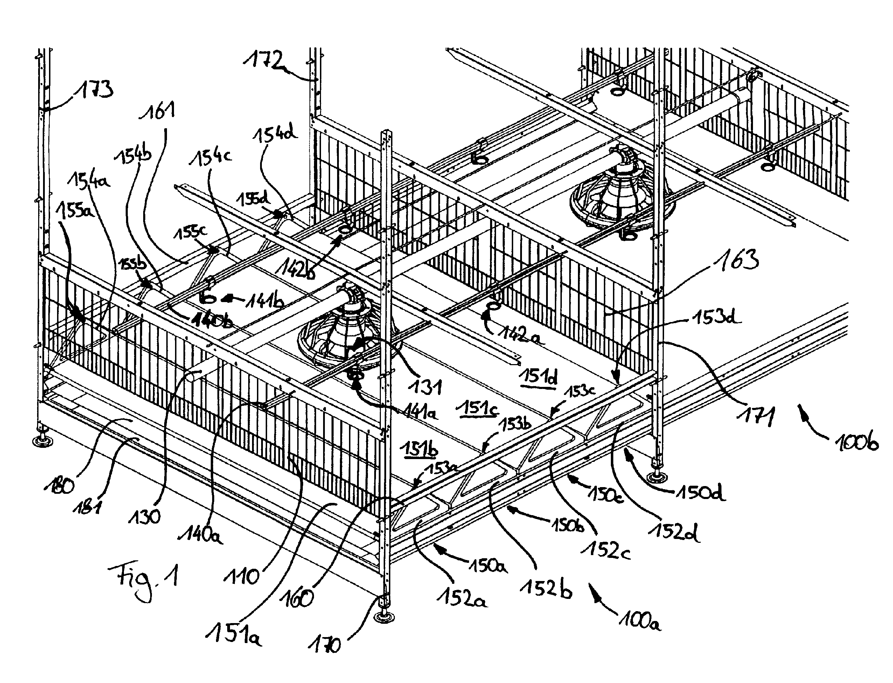

Figur 1 zeigt einen Ausschnitt aus einer Geflügelkäfiganlage gemäß der Erfindung und bildet zwei in Reihe angeordnete Geflügelkäfiganordnungen 100a, b ab. Die Geflügelkäfiganordnungen 100a, 100b sind konstruktiv grundsätzlich übereinstimmend aufgebaut. Lediglich die in Figur 1 vordere Geflügelkäfiganlage 100a ist in den relevanten Details dargestellt und wird nachfolgend erläutert:

Die Geflügelkäfiganordnung 100a wird durch ein vorderseitiges Trenngitter 110 und ein rückwärtiges Trenngitter 120 von den benachbarten Geflügelkäfiganordnungen abgetrennt. Es ist zu verstehen, dass auch die in Figur 1 linke und rechte Seite der Geflügelkäfiganordnung 100a durch ein solches Gitter abgetrennt ist, zum besseren Verständnis sind diese Gitter nicht abgebildet.

An zentraler Stelle ist in Figur 1 eine Fütterungsanordnung mit einer Versorgungsleitung 130 und einer Entnahmestelle 131 angeordnet. Jeweils seitlich von dieser Fütterungsanordnung sind noch Trinkwasserversorgungseinrichtungen mit Versorgungsleitungen 140a und 140b und Entnahmestellen 141 a, b, 142a, b vorgesehen, um die in der Geflügelkäfiganordnung 100a befindlichen Broiler zu versorgen.

Die Bodenaufstandsfläche der Geflügelkäfiganordnung 100a wird durch vier nebeneinander angeordnete Bodensegmente 150a-d gebildet. Die Bodensegmente 150a-d sind konstruktiv übereinstimmend gestaltet. Jedes Bodensegment besteht aus einer Bodenaufstandsfläche 151a-d, die beidseitig mit einem dreieckigem Rahmen 152a-d, 154a-d verbunden ist und vorzugsweise einstückig ausgeformt ist.

Die Bodenaufstandsflächen 151a-d der Bodensegmente 150a-d bilden eine ebene Bodenfläche der Geflügelkäfiganordnung 100a. In Figur 1 sind die Bodensegmente 150a-d in einer ersten Stellung abgebildet, in welcher die in der Geflügelkäfiganordnung 100a lebenden Broiler auf dieser Bodenfläche Halt finden können. Es ist zu verstehen, dass die Bodenaufstandsflächen 151 a-d vorzugsweise perforiert sind, um zu ermöglichen, dass Verunreinigungen aus dem Aufenthaltsbereich der Tiere nach unten durchfallen können.

Die seitlichen Dreiecksrahmen 152a-d und 154a-d verbinden die Bodenaufstandsflächen 151 a-d mit jeweils am oberen Ende der Rahmen 152a-d, 154a-d angeordneten Schwenklagern 153a-d, 155a-d. Die Schwenklager 153a-d, 155a-d sind an einer Horizontalstrebe 160, 161 angeordnet, die sich jeweils entlang beider Seiten der Geflügelkäfiganordnung zwischen zwei Vertikalstreben 170-172 erstrecken. Unterhalb der Bodenaufstandsflächen 151a-d verläuft über die gesamte Breite der Bodenaufstandsflächen ein Kotband 180, 181, dessen Obertrum 180 in einem Abstand von ca. 8 cm zu der Unterseite der Bodensegmente 150a, 150b verläuft und dessen Untertrum 181 in einem Abstand von ca. 5 cm vom Obertrum 180 geführt ist. Das Kotband 180, 181 verläuft entlang der gesamten Geflügelkäfiganlage, im Bereich der Geflügelkäfiganordnung 100b ist der Obertrum vollständig sichtbar, da hier die Bodensegmente der Geflügelkäfiganordnung nicht abgebildet sind.

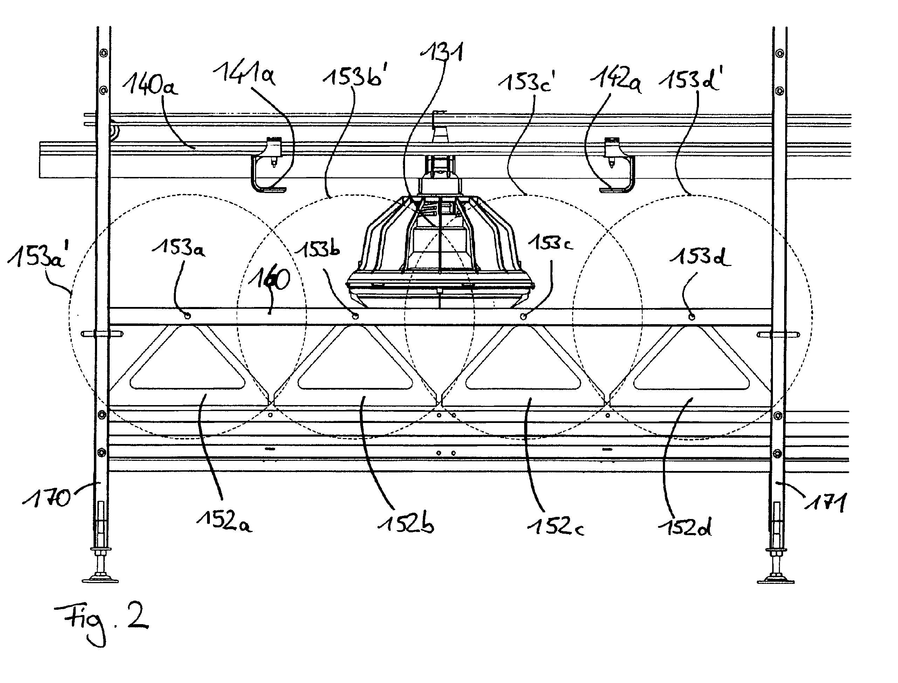

Figur 2 zeigt eine Seitenansicht der Geflügelkäfiganlage gemäß Figur 1 in der dort ebenfalls abgebildeten ersten Stellung der Bodensegmente. Es ist erkennbar, dass die dreieckigen Seitenrahmen 152a-d den Aufenthaltsraum der Broiler zur Seite hin begrenzen. Die Verschwenkbarkeit der Bodensegmente um die jeweilige Schwenkachse 154a-d und der hierbei überstrichene Raum ist durch strichpunktierte Kreise 154a'-d' abgebildet.

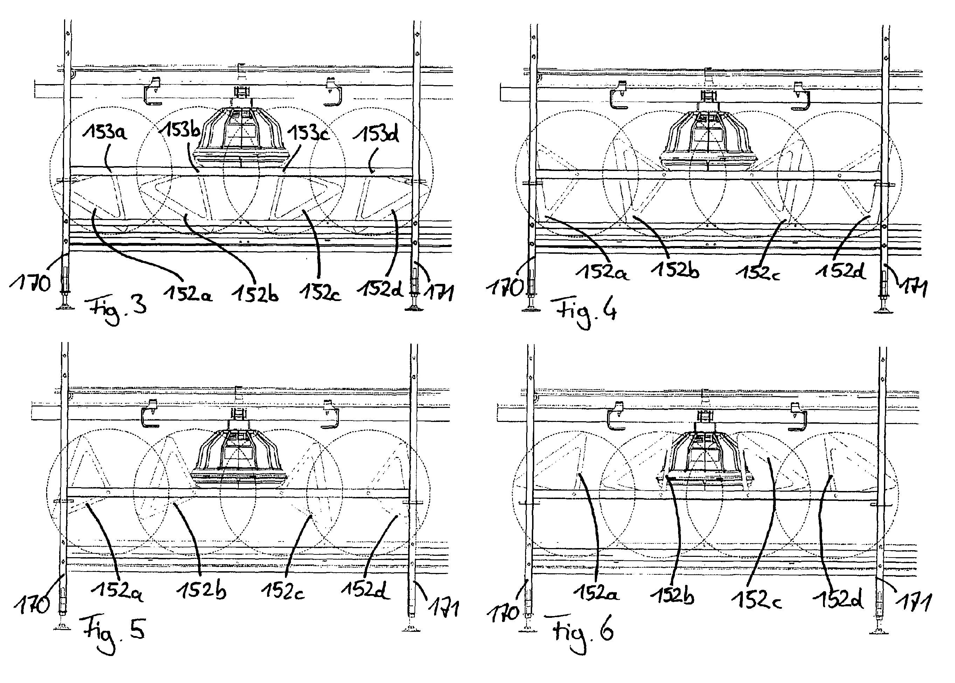

Die Figuren 3-6 bilden die Geflügelkäfiganlage gemäß Figur 2 in einer Abfolge der Verschwenkung der Bodensegmente 150a-d ab. Es kann erkannt werden, dass die beiden links abgebildeten Bodensegmente 150a, 150b im Uhrzeigersinn verschwenkt werden, wohingegen die beiden rechten Bodensegmente 150c, 150d entgegen dem Uhrzeigersinn verschwenkt werden. Die Bodensegmente sind so ausgestaltet, dass bei dieser simultanen Verschwenkung keine Kollision der Bodensegmente untereinander auftreten kann.

Figur 6 zeigt die Bodensegmente in der zweiten Stellung, welche einer Endposition der Bodensegmente entspricht. Wie für den Fachmann ersichtlich, verlieren die in der Geflügelkäfiganordnung befindlichen Broiler im Zuge der Verschwenkung gemäß den Figuren 3-6 den Halt auf den Bodenaufstandsflächen 151 a-d der Bodensegmente 150a-d und fallen auf den darunter liegenden Obertrum 180 des Kotförderbands 180, 181. Zugleich entsteht oberhalb dieses Obertrum180 eine lichte Raumhöhe H, welche den auf dem Obertrum befindlichen Broilern eine ausreichende Stehhöhe ermöglicht und es erlaubt, die Broiler durch Antreiben des Kotförderbands 180, 181 aus dem Bereich der Käfiganordnungen 100a seitlich heraus zu transportieren.

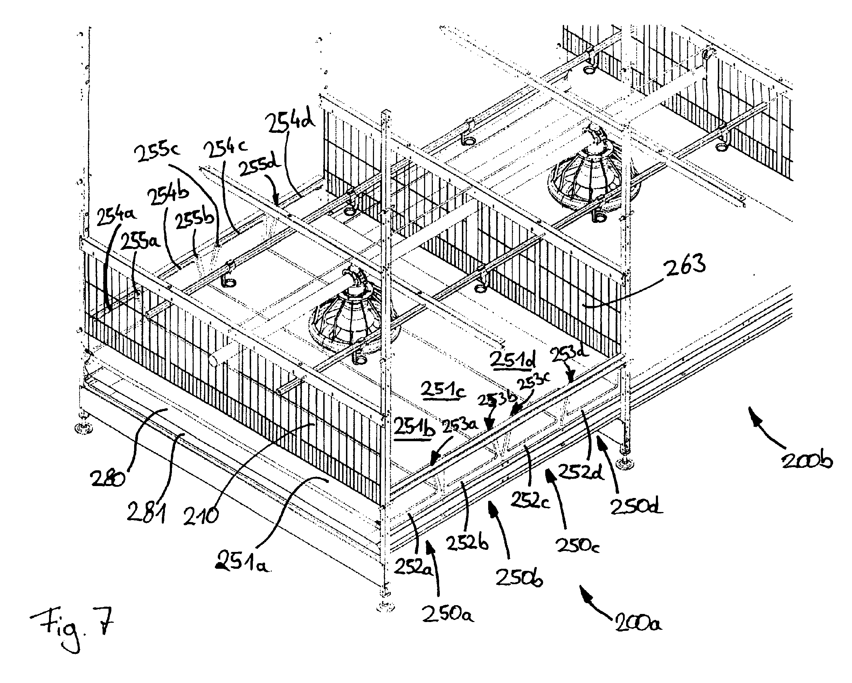

Figur 7 zeigt eine zweite Ausführungsform einer Geflügelkäfiganlage mit in Reihe angeordneten Geflügelkäfiganordnungen 200a, 200b gemäß der Erfindung. Die zweite Ausführungsform ist in einer Vielzahl von konstruktiven Merkmalen übereinstimmend ausgebildet zu der ersten Ausführungsform gemäß Figuren 1-6 und auf eine detaillierte Erörterung dieser übereinstimmenden Merkmale wird hier verzichtet. Konstruktiv einander entsprechende Elemente dieser zweiten Ausführungsform zur ersten Ausführungsform sind in den Figuren 7-11 mit entsprechenden, um 100 erhöhten Bezugszeichen bezeichnet.

Im Unterschied zu der ersten Ausführungsform gemäß Figuren 1-6 weist die in Figur 7 abgebildete Ausführungsform Bodensegmente 250a-d auf, deren Seitenrahmen 252a-d, 254a-d nicht dreieckig, sondern etwa trapezförmig ausgestaltet sind. Die Seitenrahmen 252a-d erstrecken sich ebenfalls von der Bodenaufstandsfläche 251a-d der Bodensegmente 250a-d und verbinden diese mit Schwenkachsen 253a-d, 255a-d. Diese Schwenkachsen sind exzentrisch zur Mittellinie der Bodenaufstandsflächen 251a-d angeordnet und liegen oberhalb einer Seitenstrebe der trapezförmigen Seitenrahmen 252a-d, 254a-d.

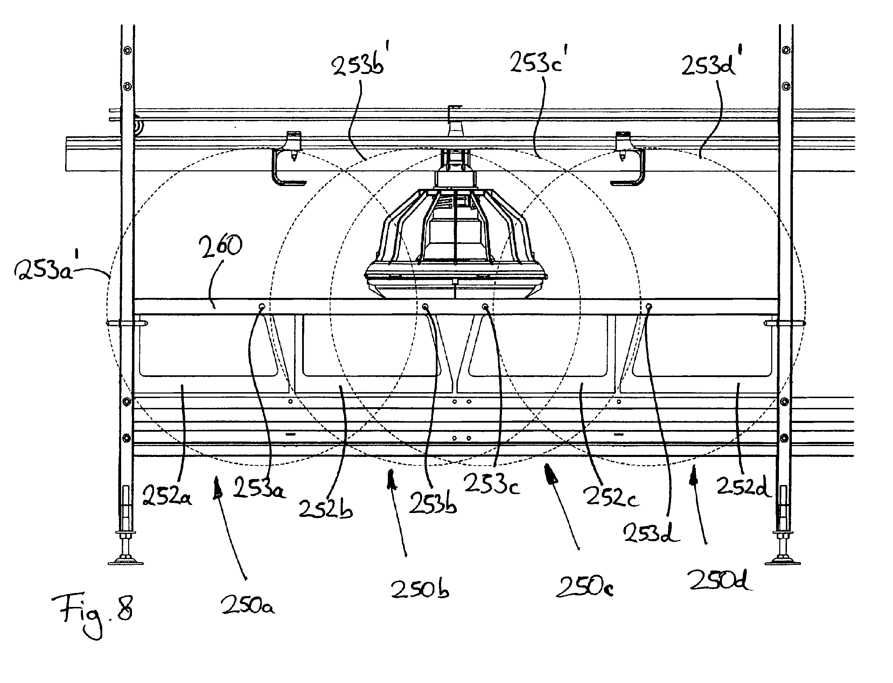

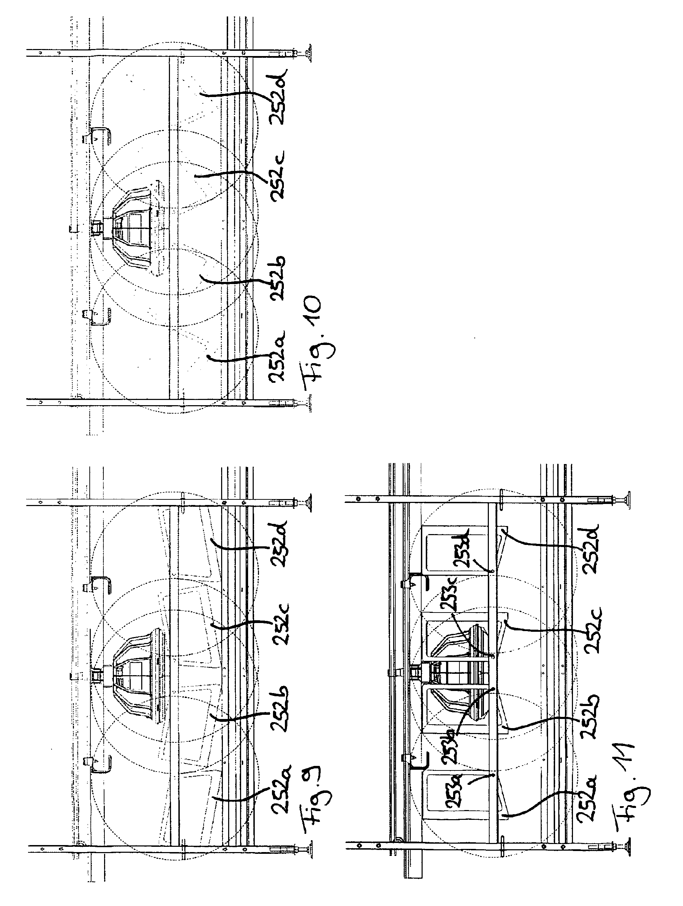

Figuren 8-11 zeigen eine Abfolge der Verschwenkung der Bodensegmente 250a-d aus einer ersten Stellung gemäß Figur 8 in eine zweite Stellung gemäß Figur 11. Wie aus den Figuren ersichtlich, werden auch bei der zweiten Ausführungsform die beiden links abgebildeten Bodensegmente 250a, 250b im Uhrzeigersinn und die beiden rechts abgebildeten Bodensegmente 250c, 250d entgegen des Uhrzeigersinns verschwenkt und im Laufe dieser Verschwenkung verlieren die in der Geflügelkäfiganordnung 200a befindlichen Broiler den Halt auf den Bodenaufstandsflächen 251a-d und fallen auf den Obertrum 280 des darunter liegenden Kotförderbandes 280, 281.

Durch die exzentrische Anordnung der Schwenklager 253a-d, 255a-d ist bei der zweiten Ausführungsform lediglich eine Verschwenkung um etwa 90° erforderlich, damit für die auf dem Obertrum 280 des Kotförderbands befindlichen Broiler eine lichte Raumhöhe H bereit gestellt wird. Die Bodenaufstandsflächen der Bodensegmente 250a, 250b stehen hierdurch in der zweiten Stellung gemäß Figur 2 genau senkrecht, was deren Reinigung weiter erleichtert.

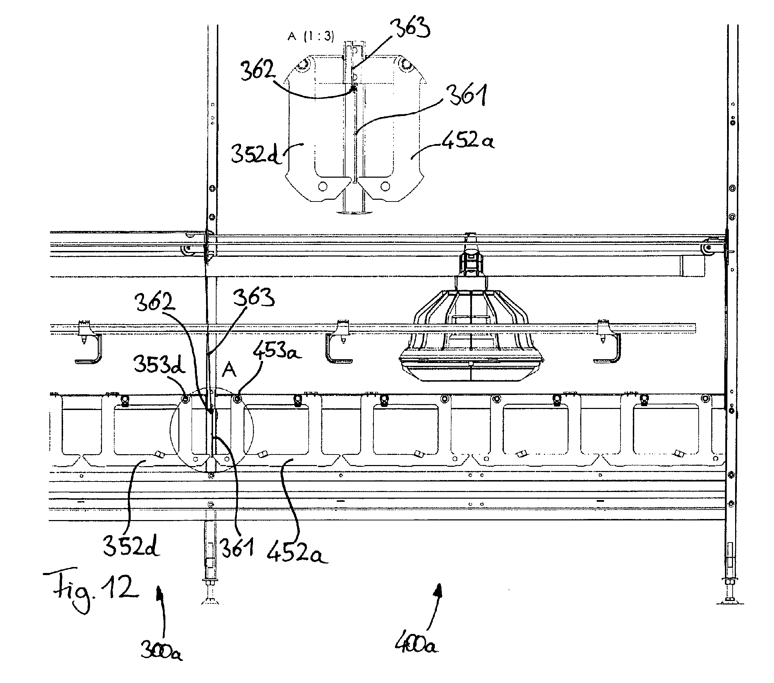

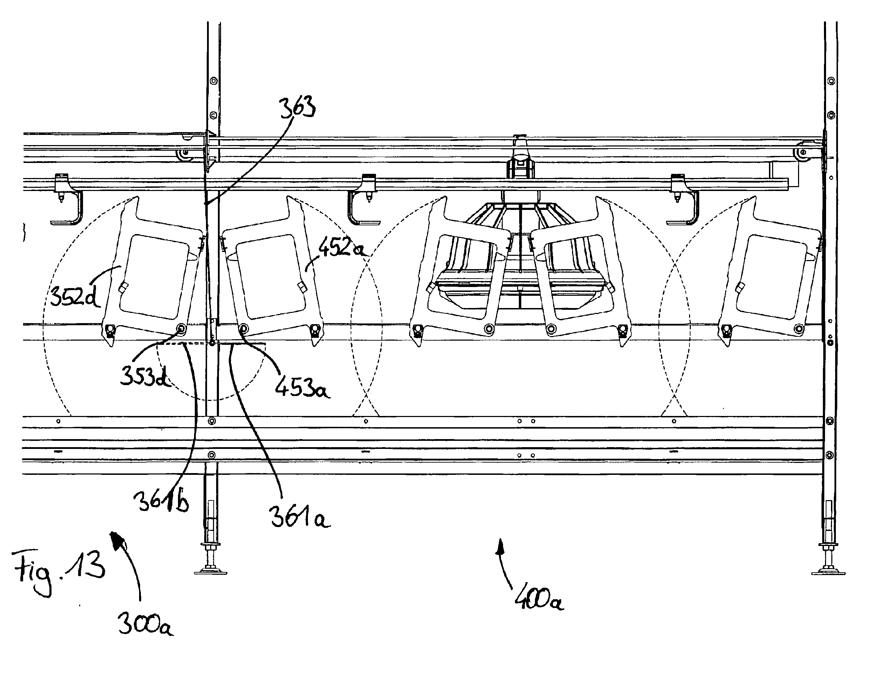

Figuren 12 und 13 zeigen eine dritte Ausführungsform, die derjenigen der in den Figuren 7-11 gezeigten Ausführungsform insoweit ähnlich ist, sich jedoch in der geometrischen Ausgestaltung der Bodensegmente etwas unterscheidet. In Figur 12 ist in einem mit A beschrifteten Kreis ein unteres Trenngittersegment 361 zu erkennen, welches in einem Ausschnitt in Figur 12 vergrößert wiedergegeben ist. Das untere Trenngittersegment 361 ist mittels einer Schwenklagerung 362 an seiner oberen Abschlusskante schwenkbar befestigt ist. Das untere Trenngittersegment 361 schließt mit seiner oberen Abschlusskante bündig an ein darüber angeordnetes feststehendes Trenngittersegment 363 an und bildet in der in Figur 12 dargestellten Schwenkstellung gemeinsam mit diesem feststehenden Trenngittersegment 363 eine fluchtende Trenngitterebene zwischen einer linken Geflügelkäfiganordnung 300a und einer rechten Geflügelkäfiganordnung 400a. In dieser Schwenkstellung wird das untere Trenngittersegment 361 durch ein links von dem unteren Trenngittersegment 361 angeordnete Bodensegment 352d der linken Geflügelkäfiganordnung 300a daran gehindert, nach links zu verschwenken. Zudem wird das untere Trenngittersegment in dieser Schwenkstellung durch ein rechts von dem unteren Trenngittersegment angeordnetes Bodensegment 452a der rechts von dem Trenngitter angeordneten Geflügelkäfiganordnung 400a daran gehindert, nach rechts zu verschwenken und ist daher in der abgebildeten Stellung fixiert. Hierdurch wird zuverlässig verhindert, dass Geflügel zwischen den beiden Geflügelkäfiganordnungen 300a, 400a wechseln kann.

Figur 13 zeigt die beiden in Figur 12 abgebildeten Geflügelkäfiganordnungen 300a, 400a in einer zweiten Stellung mit verschwenkten Bodensegmenten zur Ausstallung. Wie erkennbar ist, wird durch die Verschwenkung der beiden Bodensegmente 352d und 452a das untere Trenngittersegment 361 zur Verschwenkung freigegeben und kann daher durch Geflügel, welches sich unterhalb von den verschwenkten Bodensegmenten von links nach rechts bewegt in die mit 361 a bezeichnete zweite Stellung verschwenkt werden und diesem Geflügel daher den Durchlauf unterhalb des feststehenden Trenngittersegments 363 ermöglichen. In entsprechender Weise kann das untere Trenngittersegment 361 auch in die mit unterbrochenen Linien dargestellte zweite Stellung 361d verschwenkt werden durch Geflügel, welches sich von rechts nach links unterhalb des unteren Trenngittersegments hindurch bewegt durch eine entsprechend andere Förderrichtung der Fördervorrichtung.

## Patentansprüche

1. Geflügelkäfiganordnung, insbesondere zur Aufzucht von Mastgeflügel, umfassend:
- einen Geflügelkäfig mit
i. einem allseitig von Begrenzungswänden, insbesondere Gittern, umschlossenen Geflügelhalteraum und
ii. einer Bodenfläche,
- eine unterhalb der Bodenfläche angeordnete Fördervorrichtung mit einer Förderoberfläche zum Fördern des im Geflügelkäfig gehaltenen Geflügels vom Geflügelkäfig zu einer Verladestation wie einer Verpackungsstation, insbesondere ein Förderband, wobei die Bodenfläche so ausgebildet ist, dass sie
i. aus einer ersten Stellung, in der sie den Geflügelhalteraum nach unten begrenzt und eine Stehfläche für darin befindliches Geflügel darstellt in
ii. in eine zweite Stellung bewegt werden kann, in der sie ein Ausstallen des im Geflügelhalteraums befindlichen Geflügels auf die Fördervorrichtung erlaubt, indem sie dem Geflügelkäfig befindliche Geflügel keinen Halt mehr bietet,
und die Bodenfläche aus zumindest einem, vorzugsweise mehreren schwenkbaren Bodensegment(en) besteht, das/die zwischen der ersten und der zweiten Stellung verschwenkbar ist/sind,
**dadurch gekennzeichnet, dass** jedes schwenkbare Bodensegment eine Bodenaufstandsfläche umfasst, die um eine Schwenkachse verschwenkbar ist, die beabstandet, insbesondere oberhalb von der Bodenaufstandsfläche angeordnet ist.

2. Geflügelkäfiganordnung nach Anspruch 1,
**dadurch gekennzeichnet, dass** jedes schwenkbare Bodensegment eine Bodenaufstandsfläche umfasst, die in der ersten Stellung um einen ersten Abstand von einer Förderoberfläche der Fördervorrichtung beabstandet ist und in der zweiten Stellung um einen zweiten Abstand von dieser Förderoberfläche beabstandet ist, der größer ist als der erste Abstand.

3. Geflügelkäfiganordnung nach Anspruch 1 oder 2,
**dadurch gekennzeichnet, dass** die Bodenfläche durch mehrere Bodensegmente mit Bodenaufstandsflächen gebildet wird, deren Bodenaufstandsflächen in der ersten Stellung fluchtend zueinander angeordnet sind und so einen ebenen Käfigboden ausbilden.

4. Geflügelkäfiganordnung nach einem dem vorhergehenden Ansprüche 1, 2 oder 3, **dadurch gekennzeichnet, dass** jedes Bodensegment um eine Schwenkachse verschwenkbar ist und die Schwenkachsen der mehreren Bodensegmente in einer Ebene liegen.

5. Geflügelkäfiganordnung nach einem der vorhergehenden Ansprüche, **dadurch gekennzeichnet, dass** der Abstand zwischen der Unterseite der Bodenfläche und der Förderoberfläche in der ersten Stellung kleiner als 10 cm ist, insbesondere 3 bis 8 cm, vorzugsweise 5cm ist und in der zweiten Stellung zwischen den verschwenkten Bodensegmenten und der Förderoberfläche ein lichter Raum bereit gestellt wird, der es erlaubt, auf der Förderoberfläche angeordnetes Geflügel unterhalb den Bodensegmenten hindurchzufördern.

6. Geflügelkäfiganordnung nach einem der vorhergehenden Ansprüche,
**gekennzeichnet durch** ein schwenkbares unteres Trenngittersegment, welches zwischen einer ersten Stellung, in der es die Geflügelkäfiganordnung zu einer benachbarten Käfiganordnung absperrt, in eine zweite Stellung, in der es den Abtransport von auf der Förderoberfläche befindlichem Geflügel aus dem Bereich unterhalb des Geflügelhalteraums ermöglicht, verschwenkbar ist.

7. Geflügelkäfiganordnung nach Anspruch 6,
**dadurch gekennzeichnet, dass** das untere Trenngittersegment mit zumindest einem Bodensegment gekoppelt ist, vorzugsweise an dem ihm benachbarten Bodensegment ausgebildet und mit diesem verschwenkbar ist.

8. Geflügelkäfiganlage, umfassend
a. mehrere in einer Reihe angeordnete Geflügelkäfige, wobei jeder Geflügelkäfig
i. allseitig von Begrenzungswänden, insbesondere Gittern, umschlossene Geflügelhalteräume und
ii. eine Bodenfläche umfasst
b. eine unterhalb der Geflügelkäfige angeordnete sich entlang der Geflügelkäfige erstreckende Fördervorrichtung mit einer Förderoberfläche zum Fördern des im Geflügelkäfig gehaltenen Geflügels aus jedem der in Reihe angeordneten Geflügelkäfige zu einer Verladestation wie einer Verpackungsstation, insbesondere ein Förderband,
c. wobei die Bodenfläche jedes der Geflügelkäfige so ausgebildet ist, dass sie
i. einer ersten Stellung, in der sie den Geflügelhalteraum nach unten begrenzt und eine Stehfläche für darin befindliches Geflügel darstellt
ii. in eine zweite Stellung bewegt werden kann, in der sie ein Ausstallen des im Geflügelhalteraums befindlichen Geflügels auf die Fördervorrichtung erlaubt, indem sie dem Geflügel keinen Halt mehr bietet,
und die Bodenfläche aus zumindest einem, vorzugsweise mehreren schwenkbaren Bodensegment(en) besteht, das/die zwischen der ersten und der zweiten Stellung verschwenkbar ist/sind.
**dadurch gekennzeichnet, dass** jedes schwenkbare Bodensegment eine Bodenaufstandsfläche umfasst, die um eine Schwenkachse verschwenkbar ist, die beabstandet, insbesondere oberhalb von der Bodenaufstandsfläche angeordnet ist.

9. Geflügelkäfiganlage nach dem vorhergehenden Anspruch, **gekennzeichnet durch** ein schwenkbares unteres Trenngittersegment, welches zwischen zwei benachbarten Geflügelkäfigen angeordnet ist und diese in einer ersten Stellung voneinander absperrt und in einer zweiten Stellung den Abtransport von auf der Förderoberfläche befindlichem Geflügel aus dem Bereich unterhalb des Geflügelhalteraums ermöglicht, und welches in der ersten Stellung durch Anschläge an den zwei jeweils dem Trenngittersegment benachbarten Bodensegmenten der beiden benachbarten Geflügelkäfige daran gehindert wird, in die zweite Stellung zu gelangen, insbesondere in der ersten Stellung fixiert wird.

10. Geflügelkäfiganlage nach dem vorhergehenden Anspruch 8 oder 9, **dadurch gekennzeichnet, dass** die Geflügelkäfige nach einer der Geflügelkäfiganordnungen der vorhergehenden Ansprüche 1-7 fortgebildet sind.

11. Geflügelkäfiganlage nach einem der vorhergehenden Ansprüche 8-10. **dadurch gekennzeichnet, dass** der Abstand zwischen der Bodenfläche jedes Geflügelkäfigs und der Förderoberfläche in der ersten Stellung kleiner als 10 cm ist, insbesondere 3 bis 8 cm, vorzugsweise 5cm ist und in der zweiten Stellung zwischen den verschwenkten Bodensegmenten und der Förderoberfläche ein lichter Raum bereit gestellt wird, der es erlaubt, auf der Förderoberfläche angeordnetes Geflügel unterhalb den Bodensegmenten aller Geflügelkäfige hindurchzufördern.

12. Geflügelkäfiganlage nach einem der vorhergehenden Ansprüche 8-11, **gekennzeichnet durch**
a. einen ersten Aktuator zur Verschwenkung der Bodensegmente eines ersten Geflügelkäfigs, insbesondere eine ersten Gruppe von Geflügelkäfigen,
b. einen zweiten Aktuator zur Verschwenkung der Bodensegmente eines zweiten Geflügelkäfigs, insbesondere einer zweiten Gruppe von Geflügelkäfigen,
c. wobei der erste Geflügelkäfig bzw. die erste Gruppe und der zweite Geflügelkäfig bzw. die zweite Gruppe entlang einer gemeinsamen Fördervorrichtung solcherart angeordnet sind, dass der erste Geflügelkäfig bzw. die erste Gruppe zwischen dem zweiten Geflügelkäfig bzw. der zweiten Gruppe und einer Verladestation wie einer Verpackungsanlage angeordnet ist,
d. eine Ausstallungssteuerungseinrichtung zum Betätigen des ersten und zweiten Aktuators, die so ausgebildet ist, dass sie
i. zu einem ersten Zeitpunkt den ersten Aktuator betätigt um die Bodensegmente des ersten Geflügelkäfigs bzw. der ersten Gruppe in die zweite Stellung zu verschwenken und
ii. zu einem zweiten Zeitpunkt den zweiten Aktuator betätigt um die Bodensegmente des zweiten Geflügelkäfigs bzw. der zweiten Gruppe in die zweite Stellung zu verschwenken und hierbei den ersten Aktuator in der zweiten Stellung hält.

13. Bodensegment für eine Geflügelkäfiganordnung,
**dadurch gekennzeichnet, dass** das Bodensegment eine Bodenaufstandsfläche und zumindest einen, vorzugsweise zwei Schwenklagerpunkte umfasst, der/die so angeordnet ist/sind, dass die durch den/die Schwenklagerpunkt(e) definierte Schwenkachse von der Bodenaufstandsfläche beabstandet ist und bei Verschwenkung des Bodensegments um diese Schwenkachse die Bodenaufstandsfläche aus einer ersten Stellung, in der sie auf einer ersten Höhe angeordnet ist, in eine zweite Höhe verschwenkt wird, die oberhalb von der ersten Höhe liegt.

14. Verfahren zum Ausstallen von Geflügel, mit den Schritten:
a. Anordnen des Geflügels zur Aufzucht in einem, vorzugsweise mehreren Käfigen auf einer, vorzugsweise mehreren fluchtend nebeneinander angeordneten Bodenaufstandsflächen in einer ersten Stellung der Bodenaufstandsfläche,
b. Verschwenken der Bodenaufstandsfläche um eine außerhalb der Bodenaufstandsfläche liegende Achse in eine zweite Stellung, in welcher das Geflügel keinen Halt mehr auf den Bodenaufstandsflächen hat,
c. Fallenlassen des Geflügels auf eine unterhalb des Käfigs angeordnete Fördervorrichtung,
d. Fördern des Geflügels von dem Käfig zu einer Verladestation wie einer Verpackungsanlage mittels der Fördervorrichtung,

15. Verfahren nach dem vorhergehenden Anspruch,
**dadurch gekennzeichnet, dass** die Bodenaufstandsflächen um eine Schwenkachse solcherart verschwenkt werden, dass
a. sie in der ersten Stellung so oberhalb der Fördervorrichtung angeordnet sind, dass die lichte Höhe oberhalb der Fördervorrichtung nicht zum Fördern des Geflügels unterhalb der Käfige ausreichend ist und
b. sie in der zweiten Stellung so oberhalb der Fördervorrichtung angeordnet sind, dass die lichte Höhe oberhalb der Fördervorrichtung zum Fördern des Geflügels unterhalb der Käfige ausreichend ist.

## Claims

1. Poultry cage arrangement, in particular for rearing poultry kept for fattening, comprising:
- a poultry cage with
I. a poultry holding space enclosed on all sides by boundary walls, in particular grilles, and
II. a floor surface,
- a conveyor device disposed underneath the floor surface with a conveyor surface for conveying the bird held in the poultry cage from the poultry cage to a loading station, such as a packaging station, in particular a conveyor belt, the floor surface being designed so that it
I. can be moved from a first position in which it bounds the poultry holding space at the bottom and constitutes a standing surface for birds disposed in it
II. into a second position in which it enables the bird disposed in the poultry holding space to be uncaged onto the conveyor device so that it no longer affords any hold for the bird disposed in the poultry cage,
and the floor surface comprises at least one, preferably several, pivotable floor segment(s) which can be pivoted between the first and the second position,
**characterised in that** every pivotable floor segment has a floor standing surface which can be pivoted about a pivot axis disposed at a distance apart from, in particular above, the floor standing surface.

2. Poultry cage arrangement as claimed in claim 1, **characterised in that** every pivotable floor segment has a floor standing surface which is disposed at a first distance apart from a conveyor surface of the conveyor device in the first position and is disposed at a second distance from this conveyor surface that is greater than the first distance in the second position.

3. Poultry cage arrangement as claimed in claim 1 or 2, **characterised in that** the floor surface comprises several floor segments with floor standing surfaces, the floor standing surfaces of which are disposed flush with one another in the first position and thus form a flat cage floor.

4. Poultry cage arrangement as claimed in one of preceding claims 1, 2 or 3, **characterised in that** every floor segment can be pivoted about a pivot axis and the pivot axes of the several floor segments lie in one plane.

5. Poultry cage arrangement as claimed in one of the preceding claims, **characterised in that** the distance between the underside of the floor surface and the conveyor surface in the first position is less than 10 cm, in particular 3 to 8 cm, preferably 5 cm, and a clearance space is made available between the floor segments pivoted into the second position and the conveyor surface which enables birds disposed on the conveyor surface to be conveyed underneath the floor segments.

6. Poultry cage arrangement as claimed in one of the preceding claims, **characterised by** a pivotable bottom partition grille segment, which can be pivoted from a first position in which it shuts the poultry cage arrangement off from an adjacent cage arrangement into a second position in which it enables birds disposed on the conveyor surface to be conveyed away from the region underneath the poultry holding space.

7. Poultry cage arrangement as claimed in claim 6, **characterised in that** the bottom partition grille segment is coupled with at least one floor segment, preferably the floor segment adjacent to it, and can be pivoted with it.

8. Poultry cage system, comprising
a. several poultry cages disposed in a row, each poultry cage comprising
I. poultry holding spaces enclosed on all sides by boundary walls, in particular grilles, and
II. a floor surface,
b. a conveyor device with a conveyor surface disposed underneath the poultry cages extending along the poultry cages for conveying the bird held in the poultry cage from each of the poultry cages disposed in a row to a loading station, such as a packaging station, in particular a conveyor belt,
c. and the floor surface of each of the poultry cages is designed so that it
I. can be moved from a first position in which it bounds the poultry holding space at the bottom and constitutes a standing surface for birds disposed therein,
II. into a second position in which it enables the bird disposed in the poultry holding space to be uncaged onto the conveyor device so that it no longer affords a hold for the bird,
and the floor surface comprises at least one, preferably several, pivotable floor segment(s) which can be pivoted between the first and the second position, **characterised in that** each pivotable floor segment has a floor standing surface which can be pivoted about a pivot axis disposed at a distance apart from, in particular above, the floor standing surface.

9. Poultry cage system as claimed in the preceding claim, **characterised by** a pivotable bottom partition grille segment, which is disposed between two adjacent poultry cages and shuts these off from one another in a first position and enables birds disposed on the conveyor surface to be transported away from the region underneath the poultry holding space in a second position, and which, when in the first position, is prevented from moving into the second position by means of stops on the two floor segments of the two adjacent poultry cages adjacent to the partition grille segment respectively, in particular is fixed in the first position.

10. Poultry cage system as claimed in preceding claim 8 or 9,
**characterised in that** the poultry cages are improved by using one of the poultry cage arrangements defined in preceding claims 1-7.

11. Poultry cage system as claimed in one of preceding claims 8-10, **characterised in that** the distance between the floor surface of each poultry cage and the conveyor surface in the first position is less than 10 cm, in particular 3 to 8 cm, preferably 5 cm, and a clearance space is made available between the floor segments pivoted into the second position and the conveyor surface which enables birds disposed on the conveyor surface to be conveyed underneath the floor segments of all the poultry cages in the second position.

12. Poultry cage system as claimed in one of preceding claims 8-11, **characterised by**
a. a first actuator for pivoting the floor segments of a first poultry cage, in particular a first group of poultry cages,
b. a second actuator for pivoting the floor segments of a second poultry cage, in particular a second group of poultry cages,
c. the first poultry cage or first group and the second poultry cage or second group being disposed along a common conveyor device in such a way that the first poultry cage or first group is disposed between the second poultry cage or second group and a loading station such as a packaging plant,
d. an uncaging control device for operating the first and second actuator, which is configured so that it
I. at a first instant, activates the first actuator in order to pivot the floor segments of the first poultry cage or first group into the second position and
II. at a second instant, activates the second actuator in order to pivot the floor segments of the second poultry cage or second group into the second position and as it does so holds the first actuator in the second position.

13. Floor segment for a poultry cage arrangement, **characterised in that** the floor segment comprises a floor standing surface and at least one, preferably two, pivot bearing points, which is/are disposed so that the pivot axis defined by the pivot bearing point(s) is disposed at a distance from the floor standing surface and when the floor segment is pivoted about this pivot axis, the floor standing surface is pivoted out of a first position, in which it is disposed at a first height, to a second height which lies above the first height.

14. Method of uncaging birds, comprising the steps:
a. placing the bird for rearing in one, preferably several, cages on a, preferably several, floor standing surfaces disposed in a flush arrangement adjacent to one another when the floor standing surface is in a first position,
b. pivoting the floor standing surface about an axis lying outside of the floor standing surface into a second position in which the bird no longer has a hold on the floor standing surfaces,
c. dropping the bird onto a conveyor device disposed underneath the cage,
d. conveying the bird from the cage to a loading station, such as a packaging plant, by means of the conveyor device.

15. Method as claimed in the preceding claim, **characterised in that** the floor standing surfaces are pivoted about a pivot axis so that
a. they are disposed above the conveyor device in such a way in the first position that the clearance height above the conveyor device is not enough to convey the bird underneath the cages and
b. in the second position, they are disposed above the conveyor device so that the clearance height above the conveyor device is enough to convey the bird underneath the cages.

## Revendications

1. Système de cage pour volaille, en particulier pour l'élevage de volailles engraissées, comprenant
- une cage pour volaille dotée i. d'un espace de parcage des volailles entouré de tous les côtés par des parois de délimitation, en particulier par des grillages et
ii. d'une surface de plancher,
- un dispositif transporteur disposé sous la surface de plancher et doté d'une surface de transport servant à transporter les volailles parquées dans la cage pour volaille d'une cage pour volaille vers un poste de chargement tel qu'un poste de conditionnement, en particulier une bande transporteuse, sachant que la surface de plancher est réalisée de telle manière qu'elle
i. peut être déplacée depuis une première position, dans laquelle elle délimite l'espace de parcage des volailles vers le bas et constitue une surface de repos pour les volailles s'y trouvant,
ii. dans une deuxième position, dans laquelle elle permet d'extraire du poulailler les volailles se trouvant dans l'espace de parcage de la cage sur le dispositif transporteur, en ce qu'elle n'offre plus aucun support pour les volailles se trouvant dans la cage pour volaille,
et sachant que la surface de plancher est constituée d'au moins un segment de plancher, de préférence de plusieurs segments de plancher pouvant pivoter, lequel/lesquels peut/peuvent pivoter entre la première position et la deuxième position,
**caractérisé en ce que** chaque segment de plancher pouvant pivoter comprend une surface de contact de plancher, qui peut pivoter autour d'un axe de pivotement qui est disposé de manière espacée, en particulier au-dessus de la surface de contact de plancher.

2. Système de cage pour volaille selon la revendication 1, **caractérisé en ce que** chaque segment de plancher pouvant pivoter comprend une surface de contact de plancher, qui dans la première position, est espacée d'une surface de transport du dispositif transporteur d'une première distance et qui dans la deuxième position, est espacée de ladite surface de transport d'une deuxième distance, laquelle est plus grande que la première distance.

3. Système de cage pour volaille selon la revendication 1 ou 2,
**caractérisé en ce que** la surface de plancher est formée par plusieurs segments de plancher présentant des surfaces de contact de plancher, dont les surfaces de contact de plancher sont disposées de manière alignée les unes par rapport aux autres dans la première position et forment ainsi un plancher de cage plat.

4. Système de cage pour volaille selon l'une quelconque des revendications précédentes 1, 2 ou 3,
**caractérisé en ce que** chaque segment de plancher peut être pivoté autour d'un axe de pivotement, et **en ce que** les axes de pivotement des nombreux segments de plancher se trouvent dans un plan.

5. Système de cage pour volaille selon l'une quelconque des revendications précédentes,
**caractérisé en ce que** la distance entre le côté inférieur de la surface de plancher et la surface de transport est dans la première position inférieure à 10 cm, en particulier est comprise entre 3 et 8 cm, de préférence est de 5 cm, et **en ce qu'**un petit espace est mils disposition dans à deuxième position entre les segments de plancher pivotés et la surface de transport, lequel permet de transporter les volailles se trouvant sur la surface de transport sous les segments de plancher.

6. Système de cage pour volaille selon l'une quelconque des revendications précédentes,
**caractérisé par** un segment grillagé de séparation inférieur pouvant pivoter, lequel peut pivoter pour passer d'une première position, dans laquelle il bloque l'accès du système de cage pour volaille vers un système de cage voisin, dans une deuxième position, dans laquelle il permet l'évacuation des volailles se trouvant sur la surface de transport en dehors de la zone sous l'espace de parcage des volailles.

7. Système de cage pour volaille selon la revendication 6, **caractérisé en ce que** le segment grillagé de séparation inférieur est couplé à au moins un segment de plancher, est réalisé de préférence au niveau du segment de plancher qui lui est adjacent et peut pivoter avec ce dernier.

8. Installation de cages pour volaille comprenant
a. plusieurs cages pour volaille disposées en rangée, sachant que chaque cage pour volaille comprend
i. des espaces de parcage des volailles fermés de tous les côtés par des parois de délimitation, en particulier par des grillages et
ii. une surface de plancher
b. un dispositif transporteur disposé sous les cages pour volaille et s'étendant le long des cages pour volaille et doté d'une surface de transport servant à transport les volailles parquées dans la cage pour volaille en dehors de chacune des cages pour volaille disposées en rangée vers un poste de chargement tel qu'un poste de conditionnement, en particulier une bande transporteuse,
c. sachant que la surface de plancher de chacune des cages pour volaille est réalisée de telle manière qu'elle peut être déplacée
i. depuis une première position, dans laquelle elle délimite l'espace de parcage des volailles vers le bas et constitue une surface de repos pour les volailles s'y trouvant,
ii. dans une deuxième position, dans laquelle elle permet l'extraction des volailles se trouvant dans l'espace de parcage des volailles du poulailler pour les amener sur le dispositif transporteur en ce qu'elle n'offre plus de support pour les volailles,
et sachant que la surface de plancher est constituée d'au moins un segment de plancher, de préférence de plusieurs segments de plancher pouvant pivoter, lequel/lesquels peut/peuvent pivoter entre une première position et une deuxième position,
**caractérisée en ce que** chaque segment de plancher pouvant pivoter comprend une surface de contact de plancher, qui peut être pivotée autour d'un axe de pivotement qui est disposé de manière espacée de la surface de contact de plancher, en particulier qui est disposé au-dessus de cette dernière.

9. Installation de cages pour volaille selon la revendication précédente,
**caractérisée par** un segment grillagé de séparation inférieur pouvant pivoter, lequel est disposé entre deux cages pour volaille voisines et qui bloque l'accès de ces dernières vers les autres cages dans une première position et permet dans une deuxième position l'évacuation des volailles se trouvant sur la surface de transport en dehors de la zone sous l'espace de parcage des volailles, et que des butées au niveau de deux segments de plancher adjacents respectivement au segment grillagé de séparation des deux cages pour volaille adjacentes empêchent de parvenir dans la deuxième position, en particulier fixent ledit segment grillagé de séparation inférieur dans la première position.

10. Installation de cages pour volaille selon l'une quelconque des revendications 8 ou 9,
**caractérisée en ce que** les cages pour volaille sont perfectionnées selon l'un quelconque des systèmes de cage pour volaille des revendications précédentes 1 à 7.

11. Installation de cages pour volaille selon l'une quelconque des revendications précédentes 8 à 10,
**caractérisée en ce que** la distance entre la surface de plancher de chaque cage pour volaille et la surface de transport est dans la première position inférieure à 10 cm, est comprise en particulier entre 3 et 8 cm, est de préférence de 5 cm, et **en ce qu'**un petit espace est fourni dans la deuxième position entre les segments de plancher pivotés et la surface de transport, lequel permet de transporter les volailles se trouvant sur la surface de transport sous les segments de plancher de toutes les cages pour volaille.

12. Installation de cages pour volaille selon l'une quelconque des revendications précédentes 8 à 11, **caractérisée par**
a. un premier actionneur servant à faire pivoter les segments de plancher d'une première cage pour volaille, en particulier d'un premier groupe de cages pour volaille,
b. un deuxième actionneur servant à faire pivoter les segments de plancher d'une deuxième cage pour volaille en particulier d'un deuxième groupe de cages pour volaille,
c. sachant que la première cage pour volaille ou le premier groupe et la deuxième cage pour volaille ou le deuxième groupe sont disposés le long d'un dispositif transporteur commun de telle manière que la première cage pour volaille ou le premier groupe sont disposés entre la deuxième cage pour volaille ou le deuxième groupe et un poste de chargement tel qu'une installation de conditionnement,
d. un dispositif de commande d'extraction du poulailler servant à actionner le premier et le deuxième actionneur, lequel est réalisé de telle manière qu'il
i. actionne le premier actionneur à un premier moment pour faire pivoter les segments de plancher de la première cage pour volaille ou du premier groupe dans la deuxième position, et
ii. actionne le deuxième actionneur à un deuxième moment afin de faire pivoter les segments de plancher de la deuxième cage pour volaille ou du deuxième groupe dans la deuxième position et maintient ce faisant le premier actionneur dans la deuxième position.

13. Segment de plancher pour un système de cage pour volaille,
**caractérisé en ce que** le segment de plancher comprend une surface de contact de plancher et au moins un point de palier de pivotement, de préférence deux points de palier de pivotement, lequel/lesquels est/sont disposé(s) de telle manière que l'axe de pivotement défini par le/les points de palier de pivotement est espacé de la surface de contact de plancher, et **en ce que** lors du pivotement du segment de plancher autour dudit axe de pivotement, la surface de contact de plancher est pivotée pour passer d'une première position, dans laquelle elle est disposée à une première hauteur, à une deuxième hauteur, qui se trouve au-dessus de la première hauteur.

14. Procédé servant à extraire du poulailler les volailles, comportant les étapes suivantes consistant à :
a. disposer les volailles aux fins de l'élevage dans une, de préférence plusieurs cages sur une surface de contact, de préférence sur plusieurs surfaces de contact de plancher disposées de manière alignée les unes à côté des autres dans une première position de la surface de contact de plancher,
b. faire pivoter la surface de contact de plancher autour d'un axe se trouvant l'extêrieur de la surface de contact de plancher dans une deuxième position, dans laquelle les volailles ne disposent plus de support sur les surfaces de contact de plancher,
c. faire tomber les volailles sur un dispositif transporteur disposé sous la cage,
d. transporter les volailles depuis la cage vers un poste de chargement tel qu'une installation de conditionnement au moyen du dispositif transporteur.

15. Procédé selon la revendication précédente, **caractérisé en ce que** les surfaces de contact de plancher sont pivotées autour d'un axe de pivotement de telle manière
a. qu'elles sont disposées dans la première position au-dessus du dispositif transporteur de telle manière que la petite hauteur au-dessus du dispositif transporteur n'est pas suffisante pour transporter les volailles sous les cages, et
b. qu'elles sont disposées dans la deuxième position au-dessus du dispositif transporteur de telle manière que la petite hauteur au-dessus du dispositif transporteur n'est pas suffisante pour transporter les volailles sous les cages.
